# EUROPEAN PATENT APPLICATION

(11) **EP 4 360 482 A1**
(43) Date of publication of application: **01.05.2024**
(21) Application number: 21946991.3
(22) Date of filing: 21.06.2021
(51) Int. Cl.: A24F 40/50

(54) **CONTROLLER FOR SUCTION APPARATUS**

(71) Applicant: Japan Tobacco, Inc., Tokyo, 105-6927 (JP)
(72) Inventor: FUJINAGA, Ikuo, Tokyo 130-8603 (JP); FUJITA, Hajime, Tokyo 130-8603 (JP)
(74) Representative: Hoffmann Eitle
(86) International application number: PCT/JP2021/023447
(87) International publication number: WO 2022/269701

(57) **Abstract**

A controller for an inhalation apparatus operates by electric power supplied from a chargeable power supply. The controller includes a holding portion configured to hold an atomizer including a heater configured to heat an aerosol source, a nonvolatile display configured to display an indicator concerning a remaining amount of the power supply, and a processor configured to change the indicator in a case where the remaining amount becomes smaller than a first threshold in discharging of the power supply, and to change the indicator in a case where the remaining amount becomes larger than a second threshold different from the first threshold in charging of the power supply.

## Description

### TECHNICAL FIELD

The present invention relates to a controller for an inhalation apparatus.

### BACKGROUND ART

In an aerosol generation apparatus that generates aerosol that can be inhaled, the number of puff operations (inhalation operations) that can be performed by one charge can be one important indicator. To improve such indicator, it is important to reduce the power consumption in a display unit and the like provided in the aerosol generation apparatus.

PTL 1 describes that electronic paper (e-ink) is adopted for the display unit of an electronic cigarette to reduce the power consumption. In addition, PTLs 2 and 3 describe that e-ink can be adopted for the display unit of an inhalation apparatus. However, PTLs 1, 2, and 3 do not disclose the timing or condition of updating display of electronic paper, and thus provide no technical meaning other than the use of electronic paper as a display device.

### CITATION LIST

### PATENT LITERATURE

PTL 1: Chinese Utility Model Registration No. 203505584
PTL 2: US-2017-0304567
PTL 3: U.S. Patent No. 8851068

### SUMMARY OF INVENTION

### TECHNICAL PROBLEM

One aspect of the present invention provides a preferable example of control of a nonvolatile display in a controller for an inhalation apparatus.

One aspect of the present invention is related to a controller for an inhalation apparatus, that operates by electric power supplied from a chargeable power supply, and the controller for the inhalation apparatus comprises: a holding portion configured to hold an atomizer including a heater configured to heat an aerosol source; a nonvolatile display configured to display an indicator concerning a remaining amount of the power supply; and a processor configured to change the indicator in a case where the remaining amount becomes smaller than a first threshold in discharging of the power supply, and to change the indicator in a case where the remaining amount becomes larger than a second threshold different from the first threshold in charging of the power supply.

In one embodiment, the processor changes the indicator from a first indicator to a second indicator in a case where the remaining amount becomes smaller than the first threshold in discharging of the power supply, and changes the indicator from the second indicator to the first indicator in a case where the remaining amount becomes larger than the second threshold in charging of the power supply.

In one embodiment, the processor changes the second indicator to a third indicator in a case where the remaining amount becomes smaller than a third threshold smaller than the first threshold in discharging of the power supply, and changes the third indicator to the second indicator in a case where the remaining amount becomes larger than a fourth threshold smaller than the second threshold in charging of the power supply.

In one embodiment, the second threshold is larger than the first threshold.

In one embodiment, the second threshold is smaller than the first threshold.

In one embodiment, a difference between the second threshold and the first threshold is larger than a change of the remaining amount caused by heating of the heater corresponding to at least one puff operation. [0012] In one embodiment, the nonvolatile display selectively displays one of the first indicator and the second indicator as the indicator concerning the remaining amount of the power supply, and the first indicator represents that the remaining amount is sufficient and the second indicator represents that the remaining amount is insufficient.

In one embodiment, a difference between a maximum value of the remaining amount and the second threshold is smaller than a difference between the second threshold and the first threshold.

In one embodiment, in a case where the remaining amount is smaller than a predetermined value, the processor suppresses discharging of the power supply, and the difference between the second threshold and the first threshold is larger than a difference between the first threshold and the predetermined value.

In one embodiment, the difference between the first threshold and the predetermined value is larger than the difference between the maximum value of the remaining amount and the second threshold.

In one embodiment, the processor is configured to heat the aerosol source in accordance with preset temperature control information, and a sequence from a start to an end of heating of the aerosol source based on the temperature control information is one sequence, and a difference between the second threshold and the first threshold is larger than a change of the remaining amount caused by executing the sequence at least once.

In one embodiment, in a state in which the power supply is charged, an image representing the charging state is displayed on the nonvolatile display.

In one embodiment, a charging connector configured to be supplied with electric power for charging the power supply is further provided, wherein the processor changes display of the nonvolatile display using the electric power supplied via the charging connector.

### BRIEF DESCRIPTION OF DRAWINGS

Fig. 1 is an exploded perspective view of an inhalation apparatus;
Fig. 2 is an assembly completed diagram of the inhalation apparatus;
Fig. 3 is a view of the internal arrangement of the inhalation apparatus;
Fig. 4 is a circuit diagram showing an example of the arrangement of an electrical component incorporated in the inhalation apparatus;
Fig. 5 shows a state transition diagram of the inhalation apparatus or a power supply unit, and views of display examples of a display;
Fig. 6 is a view showing display examples of the display;
Fig. 7 is a view showing an example of transition of a remaining battery amount indicator displayed on the display;
Fig. 8 is a view showing another example of transition of the remaining battery amount indicator displayed on the display;
Fig. 9 is a view showing still another example of transition of the remaining battery amount indicator displayed on the display;
Fig. 10 is a flowchart illustrating an example of the operation of a processor 207 concerning display of the remaining battery amount indicator; and
Fig. 11 is a flowchart illustrating an example of the operation of the processor 207 concerning display of the remaining battery amount indicator.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

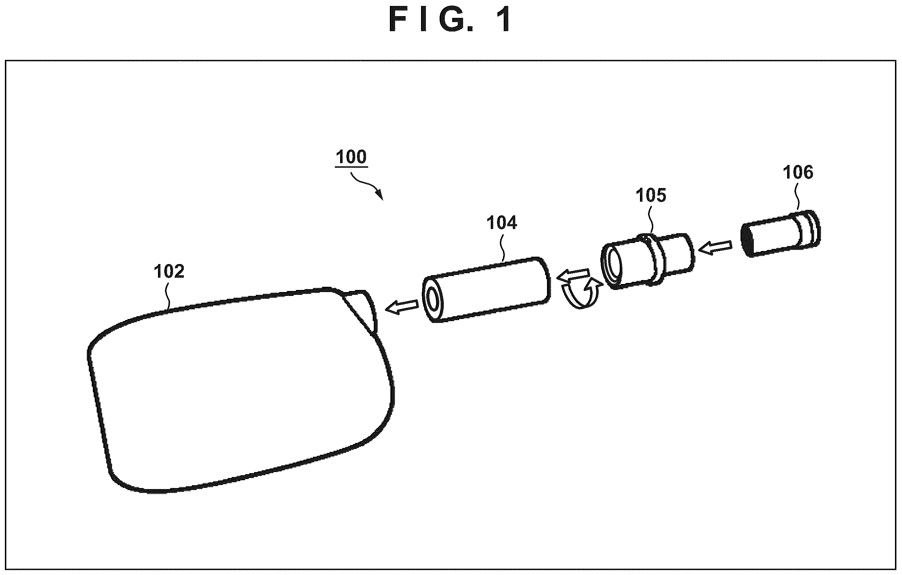

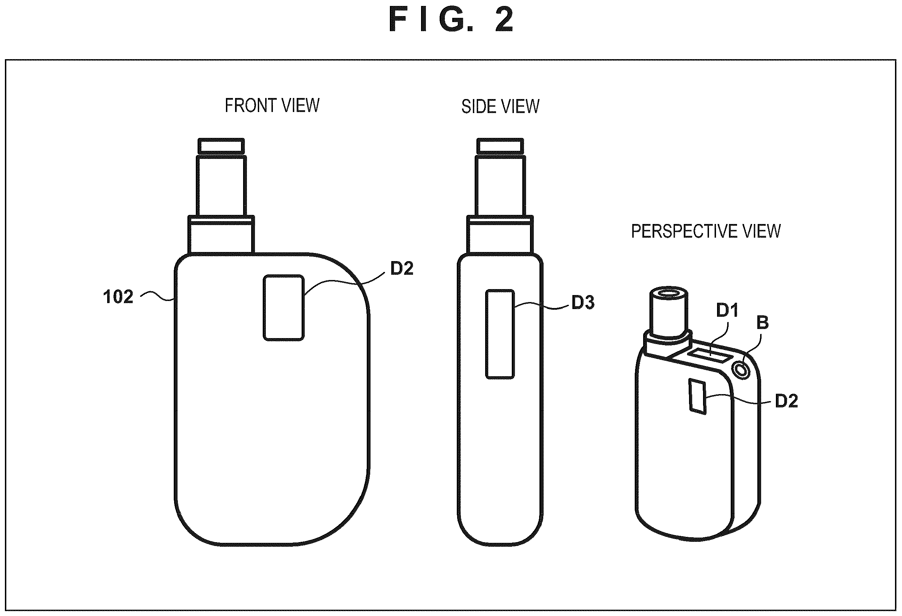

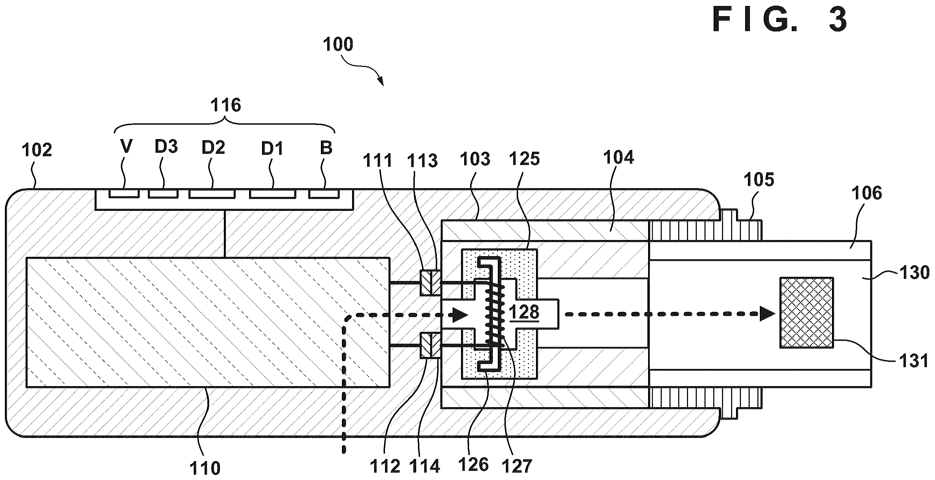

The arrangement of an inhalation apparatus 100 as one form of an aerosol generation apparatus will be described with reference to Figs. 1, 2, and 3. Fig. 1 shows an exploded perspective view of the inhalation apparatus 100, Fig. 2 shows an assembly completed diagram (front view, side view, and perspective view) of the inhalation apparatus 100, and Fig. 3 shows a view of the internal arrangement of the inhalation apparatus 100. The inhalation apparatus 100 can be configured to provide, to a user via a mouthpiece portion 130, aerosol, flavored aerosol, a gas containing aerosol and a flavor material, aerosol, or aerosol containing a flavor material in accordance with an operation of requesting generation of aerosol (to be also referred to as an "atomization request" hereinafter) such as an inhalation operation by the user. The inhalation apparatus 100 can include a power supply unit 102 as a controller for the inhalation apparatus, an atomizer 104, a capsule holder 105, and a capsule 106.

The atomizer 104 can be configured to generate flavored aerosol from the generation source of an aerosol source. The aerosol source can be, for example, a liquid such as a polyhydric alcohol such as glycerin or propylene glycol. Alternatively, the aerosol source may contain a drug. The aerosol source may be a liquid, a solid, or a mixture of a liquid and a solid. A vapor source such as water may be used in place of the aerosol source. The atomizer 104 may be provided as a cartridge detachable from the power supply unit 102. The atomizer 104 may be provided not to be detachable from the power supply unit 102. In this specification, the atomizer 104 will sometimes be referred to as the cartridge 104 hereinafter. The power supply unit 102 may be understood as a driving unit that drives the atomizer 104, a holding body that holds the atomizer 104, a main body that causes the atomizer 104 to function, or the like.

The power supply unit 102 can include a holding portion 103 that holds the atomizer 104. The holding portion 103 can be configured to accommodate the overall atomizer 104 or a part of it. The holding portion 103 may further be configured to hold the capsule holder 105. Alternatively, the capsule holder 105 may be held by the atomizer 104. The capsule holder 105 holds the capsule 106. The capsule holder 105 may function to fix the atomizer 104 in cooperation with the holding portion 103.

The holding portion 103 may include a lock mechanism for preventing the capsule holder 105 from dropping from the holding portion 103. The lock mechanism can include a second engagement portion configured to engage with a first engagement portion that can be provided in the capsule holder 105. In a state in which the lock mechanism operates, that is, a state in which the capsule holder 105 is locked by the lock mechanism, connecting portions 113 and 114 of the atomizer 104 are pressed against connecting portions 111 and 112 of the power supply unit 102, respectively, and electrical connections between the connecting portions 113 and 114 and the connecting portions 111 and 112 can thus be provided.

The capsule holder 105 may be integrated with the atomizer 104 or the power supply unit 102. Furthermore, if the capsule 106 is inserted into the opening portion of the capsule holder 105, a gas can circulate between the atomizer 104 and the capsule 106. The capsule 106 can include a flavor source 131. The flavor source 131 can be, for example, a molded body formed by molding a tobacco material. Alternatively, the flavor source 131 may be formed by a plant (for example, mint, herb, Chinese herb, coffee bean, and the like) other than tobacco. A flavor such as menthol may be added to the flavor source. The flavor source 131 may be added to the aerosol source. The user can hold, in the mouth, the mouthpiece portion 130 formed at the distal end of the capsule 106 and inhale flavored aerosol.

The power supply unit 102 can include an electrical component 110. The electrical component 110 can include a user interface 116. Alternatively, the power supply unit 102 may be understood to include the electrical component 110 and the user interface 116. The user interface 116 can include an action button B as an operation unit operable by the user. The action button B can be a button used as a trigger for an operation such as activation of the power supply unit 102 or display of information.

The user interface 116 can further include a first display D1 as a first notification unit and a second display D2 as a second notification unit. The first display D1 and the second display D2 may have different display principles. In this case, the power consumption of the first display D1 is different from that of the second display D2. For example, the first display D1 can be an Organic Light Emitting Diode (OLED) display, and the second display D1 can be an electronic paper (e-ink) display. The electronic paper (e-ink) display is a kind of nonvolatile display. The OLED display that can be adopted as the first display D1 does not require a backlight device that is required by a liquid crystal display since the organic light emitting diode emits light. The electronic paper display that can be adopted as the second display D2 does not require electric power to continuously hold an image. Therefore, the power consumption of the electronic paper display is smaller than that of the OLED display. However, the electronic paper display has no self-light emitting function unlike the OLED display, and thus has low visibility in a dark environment, as compared with the OLED display.

The user interface 116 can further include a third notification unit in addition to the first display D1 and the second display D2. The third notification unit can include a third display D3 and/or a vibration generation unit V As the third display D3, for example, a Light Emitting Diode (LED) display can be adopted. In an example, the LED display can be formed by 10 or less, 20 or less, or 30 or less LEDs. In this case, the LED display can display a small amount of information, as compared with the electronic paper display, but has high visibility since high luminance can be implemented. Alternatively, the LED display may be a display formed by an LED array.

The vibration generation unit V can be formed by a vibration motor for vibrating the housing of the power supply unit 102. By vibrating the housing by the vibration motor, it is possible to notify the user, who holds the housing, of the state of the power supply unit 102. In an example, the power consumption of the first display D1 and the power consumption of the third display are larger than that of the second display D2, and the power consumption of the first display D1 is larger than that of the third display D3 or the vibration generation unit V

Fig. 2 shows an example of the arrangement of the action button B, the first display D1, the second display D2, and the third display D3. In the example shown in Fig. 2, the first display D1 is arranged on the upper surface of the power supply unit 102, and the second display D2 and the third display D3 are arranged on different side surfaces of the power supply unit 102. However, the arrangement positions of the displays D1, D2, and D3 may be changed, or the displays D1, D2, and D3 may be arranged at positions different from those shown in Fig. 2. The third display D3 (for example, an LED display) may be arranged around a window portion for viewing the remaining amount of the aerosol source in the atomizer 104, as shown in, for example, the side view of Fig. 2. Alternatively, the third display D3 may be arranged around the action button B. Furthermore, the arrangement position of the action button B is not limited to that shown in the example of Fig. 2, and the action button B may be arranged at another position.

The power supply unit 102 can include the first connecting portion 111 and the second connecting portion 112. In a state in which the atomizer 104 is held by the holding portion 103 and the capsule holder 105 is attached to the holding portion 103, the first connecting portion 111 can electrically be connected to the third connecting portion 113 of the atomizer 104, and the second connecting portion 112 can electrically be connected to the fourth connecting portion 114 of the atomizer 104. The first connecting portion 111, the second connecting portion 112, the third connecting portion 113, and the fourth connecting portion 114 can be electrical contacts or connectors. The power supply unit 102 can supply electric power to the atomizer 104 via the first connecting portion 111 and the second connecting portion 112.

The atomizer 104 can include the third connecting portion 113 and the fourth connecting portion 114. Furthermore, the atomizer 104 can include a heater 127 for generating flavored aerosol from the generation source of the aerosol source, a container 125 that holds the aerosol source, and a transport portion 126 that transports the aerosol source held by the container 125 to a heating area by the heater 127 and holds the aerosol source in the heating area. At least a part of the heating area can be arranged in a channel 128 provided in the atomizer 104. The first connecting portion 111, the third connecting portion 113, the heater 127, the fourth connecting portion 114, and the second connecting portion 112 form a current path configured to flow a current to the heater 127. The transport portion 126 can be made of, for example, a fiber material such as glass fiber, a porous material such as ceramic, or a combination thereof. Note that the transport portion 126 can also be called a wick. Note that the means for transporting the aerosol source in the container 125 to the heating area is not limited to the wick, and may be implemented by a spraying device such as a spray or a transporting means such as a pump.

If the user holds the mouthpiece portion 130 in the mouth and performs a inhalation operation, air flows into the channel 128 of the atomizer 104 through an opening (not shown), as exemplified by a broken arrow. When the heater 127 heats the aerosol source, the vaporized and/or aerosolized aerosol source is transported toward the mouthpiece portion 130 by air. In the process in which the aerosol source is transported toward the mouthpiece portion 130, the vaporized aerosol source is cooled to form fine liquid droplets, thereby promoting aerosolization. In the arrangement in which the flavor source 131 is arranged, a flavor material generated from the flavor source 131 is added to the aerosol, and the resultant flavored aerosol is transported to the mouthpiece portion 130, and inhaled into the user's mouth. Since the flavor material generated from the flavor source 131 is added to the aerosol, the flavor material can efficiently be transported to the lungs of the user without staying in the oral cavity of the user.

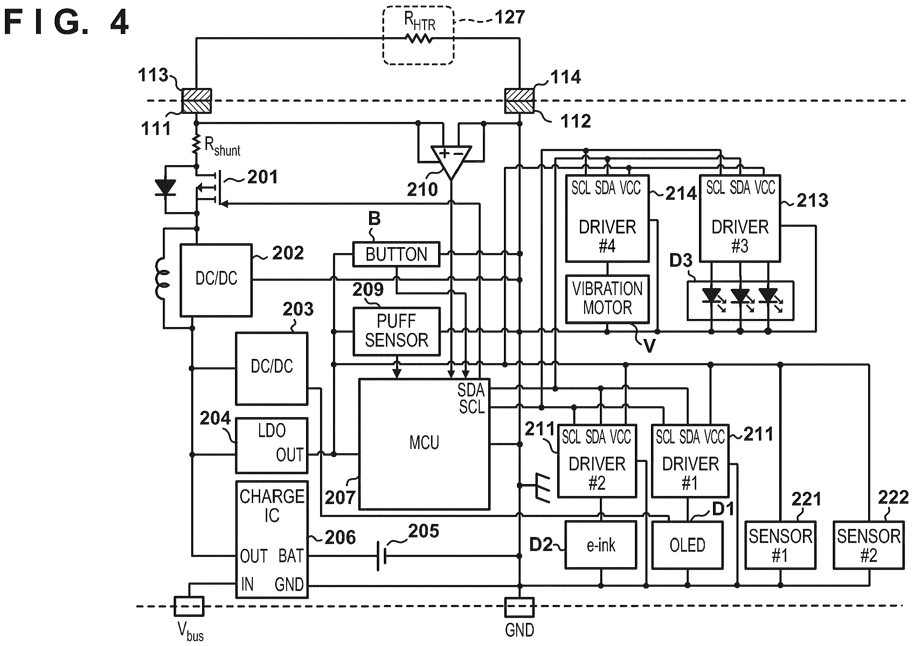

Fig. 4 shows an example of the arrangement of the electrical component 110. The electrical component 110 can include a power supply 205 and a charging circuit 206. The power supply 205 can be a chargeable battery (secondary battery) such as a lithium-ion secondary battery. Alternatively, the power supply 205 may be formed by an electric double-layer capacitor such as a lithium-ion capacitor. The power supply 205 can be charged using, for example, electric power supplied from a V_{bus} port. A power supply device (external power supply) (not shown) can be connected to the V_{bus} port via a cable. The V_{bus} port, the cable, and the power supply device can be formed in compliance with, for example, standards such as the Universal Serial Bus (USB) Type-A, Type-B, and Type-C. The power supply device can supply electric power to the power supply 205 via the cable and the V_{bus} port. The power supply device can be a personal computer (PC) or a charger such as a portable battery. When the power supply unit 102 is connected to the charger via the V_{bus} port and the cable, the power supply unit 102 and the charger communicate with each other, and then the charger can charge the power supply 205. Note that for connection between the power supply unit 102 and the power supply device, not only the USB interface but also other various communication methods that can implement data communication and electric power supply can be applied.

The charging circuit 206 can supply a charge current from a charging terminal BAT to the power supply 205 using electric power supplied from the power supply device to an input terminal IN, thereby charging the power supply 205. Furthermore, the charging circuit 206 can output electric power or a voltage from a voltage output terminal OUT using the electric power supplied from the power supply device. Therefore, even in charging of the power supply 205 by the charging circuit 206, the charging circuit 206 can supply the electric power or voltage to voltage converters 202, 203, and 204. In a case where the power supply device is not connected to the Vbus port, the charging circuit 206 can output the electric power or voltage from the voltage output terminal OUT using the electric power of the power supply 205 supplied from the power supply 205 to the charging terminal BAT. Thus, during a period other than a period in which the power supply 205 is charged by the charging circuit 206, the charging circuit 206 can supply the electric power or voltage to the voltage converters 202, 203, and 204.

The electrical component 110 can include one or a plurality of voltage converters. In a case where the electrical component 110 includes a plurality of voltage converters, at least two of the voltage converters can generate different voltages or equal voltages. In the example of the arrangement shown in Fig. 4, the electrical component 110 includes the voltage converters 202, 203, and 204. The electrical component 110 need not include any voltage converter. In this case, a voltage output from the power supply 205 can be provided to a plurality of elements forming the electrical component 110 with a small voltage drop caused by the wire resistance. In the example of the arrangement shown in Fig. 4, the voltage converters 202 and 203 are each formed by a switching regulator such as a DC/DC converter but at least one of the voltage converters may be formed by an LDO (Low DropOut) or a circuit of another system. In the example of the arrangement shown in Fig. 4, the voltage converter 204 is formed by an LDO (Low DropOut) but may be formed by a switching regulator such as a DC/DC converter or a circuit of another system.

The electrical component 110 can include a processor 207 that operates in accordance with software (program) installed in advance. The processor 207 can be configured to control the plurality of elements forming the electrical component 110. The processor 207 can be formed by, for example, an MCU (Micro Controller Unit). The processor 207 may be replaced by another device such as an ASIC. The processor 207 can be supplied with a voltage (electric power) from the voltage converter 204. The processor 207 can be configured to control drivers 211, 212, 213, and 214 as elements forming the electrical component 110. The drivers 211, 212, 213, and 214 drive the displays D1, D2, and D3 and the vibration motor V, respectively. Therefore, the processor 207 may be understood as a processor that drives or controls the displays D1, D2, and D3 and the vibration motor V

The drivers 211, 212, 213, and 214 can be supplied with the voltage (electric power) from the voltage converter 204. The voltage converter 204 can also supply the voltage (electric power) to the action button B. When the action button B is set from the OFF state to the ON state by the user, it can supply a signal of an active level (for example, high level) to the processor 207. The first display D1 that can be formed by an OLED can be supplied with a voltage (electric power) from the voltage converter 203. In the example shown in Fig. 4, the displays D2 and D3 and the vibration motor V can be supplied with voltages (electric power) from the drivers 212, 213, and 214, respectively. Alternatively, at least one of the displays D2 and D3 and the vibration motor V may be supplied with the voltage (electric power) from one of the voltage converters 202, 203, and 204.

The power supply unit 102 may include a puff sensor 209 that detects an inhalation operation by the user, that is, a puff, and the voltage converter 204 can supply the voltage (electric power) to the puff sensor 209. The puff sensor 209 can detect a puff by detecting, for example, at least one of the pressure, the sound, and the temperature (for example, the temperature of air flowing into the channel 128 of the atomizer 104 via the above-described opening, or the temperature of the heater 127).

The electrical component 110 can include a switch 201 for controlling energization (supply of electric power) to the heater 127 as the load of the atomizer 104. The switch 201 can be, for example, a MOSFET including a body diode but may be formed by another switching element. The voltage converter 202 can supply a voltage (electric power) to the heater 127 via the switch 201. A shunt resistor Rₛₕᵤₙₜ may be arranged in a current path or a closed circuit formed by including the switch 201 and the heater 127.

The electrical component 110 can include a measurement circuit 210 for measuring the temperature of the heater 127. The heater 127 can have a positive or negative temperature coefficient characteristic in which a resistance value R_{HTR} changes in accordance with the temperature of the heater 127, and the resistance value R_{HTR} of the heater 127 can have a strong correlation with the temperature of the heater 127. The measurement circuit 210 is a circuit for measuring the resistance value R_{HTR} of the heater 127, and can be configured to, for example, measure the voltages at the two terminals of the heater 127 by an operational amplifier. The output from the measurement circuit 210 is provided to the processor 207, and the processor 207 can calculate the resistance value R_{HTR} based on the output from the measurement circuit 210 and a current value flowing through the heater 127. The current value can be obtained using, for example, a detection circuit that detects the voltages at the two terminals of the shunt resistor Rₛₕᵤₙₜ. The detection circuit may be, for example, a circuit that detects the potential difference between the two terminals of the shunt resistor Rₛₕᵤₙₜ, and can be provided as, for example, anAD converter in the processor 207. The processor 207 can control the switch 201 so as to perform feedback control, for example, PID control of the temperature of the heater 127 based on the temperature of the heater 127 measured using the measurement circuit 210.

The electrical component 110 may include a first sensor 221 that detects the presence or absence of the cartridge 104 and a second sensor 222 that detects the presence or absence of the capsule 106. Outputs from the first sensor 221 and the second sensor 222 can be provided to the processor 207. The first sensor 221 and the second sensor 222 can be supplied with the voltage (electric power) from the voltage converter 204. Each of the first sensor 221 and the second sensor 222 can be, for example, a photo interrupter, a proximity sensor, an RFID system, or a switch. The switch that detects the presence or absence of the cartridge 104 can be turned on (or off) when the cartridge 104 is inserted into the holding portion 103, and turned off (or on) when the atomizer 104 is detached from the holding portion 103. The switch that detects the presence or absence of the capsule 106 can be turned on (or off) when the capsule 106 is inserted into the holding portion 103, and turned off (or on) when the capsule 106 is detached from the holding portion 103.

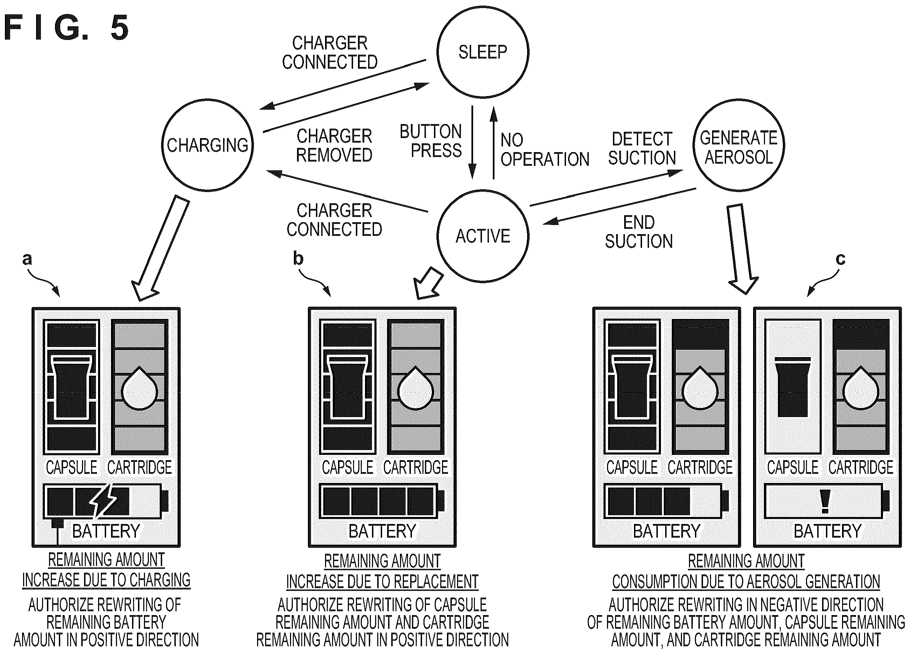

The state transition of the power supply unit 102 or the inhalation apparatus 100 and a display example of the second display D2 in each state according to the embodiment will be described with reference to a state transition diagram shown in Fig. 5. The power supply unit 102 can have four operation modes of a sleep mode, an active mode, an aerosol generation mode, and a charging mode. Note that the first display D1 may also be controlled to perform display, similar to the second display D2. Alternatively, the first display D1 and the third display D3 may be controlled to display simplified display contents of the second display D2. Alternatively, the first display D1 and the third display D3 may display information for complementing information displayed on the second display D1.

The sleep mode is a state in which the power supply unit 102 stops the main operation. In the sleep mode, no electric power for heating the aerosol source is supplied to the heater 127 of the atomizer or cartridge 104. In the sleep mode, the electric power consumed by the power supply unit 102 can be minimized. The sleep mode can also be called a power-saving mode or a standby mode. In the sleep mode, the aerosol providing function of the power supply unit 102 is locked, and thus the user cannot inhale aerosol.

In the sleep mode, if a predetermined operation is performed on the action button B, the lock is released, and the power supply unit 102 shifts to the active mode. The predetermined operation can be, for example, an operation of repeatedly pressing the action button B a predetermined number of times (for example, three times), an operation of long-pressing the action button B for a predetermined time (for example, 3 sec), or the like. If, in the active mode, a predetermined time elapses without the predetermined operation, the power supply unit 102 or the inhalation apparatus 100 can return to the sleep mode.

If the puff sensor 209 detects an inhalation (a puff) by the user in the active mode, the power supply unit 102 shifts to the aerosol generation mode of generating aerosol. When the inhalation ends or an inhalation time reaches a predetermined upper limit time, the power supply unit 102 can return to the active mode. The active mode and the aerosol generation mode may be understood as the first mode in which it is possible to control discharge from the power supply 205 to the heater 127, and the sleep mode may be understood as the second mode in which the power consumption is smaller than in the first mode. In accordance with the operation of the action button B, the power supply unit 102 may shift from the active mode to the aerosol generation mode. In this case, the power supply unit 102 can return to the active mode when inhalation is detected a predetermined number of times or a predetermined time elapses in the aerosol generation mode.

When the external power supply (charger) is connected to the V_{bus} port in the sleep mode or the active mode, the inhalation apparatus 100 shifts to the charging mode and the power supply 205 is charged. When the external power supply is detached from the V_{bus} port or the power supply is set in a full charge state, the inhalation apparatus 100 shifts to the sleep mode. The full charge state means that the SOC (State Of Charge) or the charging rate is 100% or is equal to or higher than a predetermined value (for example, 98%, 95%, or 90%) close to 100%. The power supply unit 102 or the inhalation apparatus 100 may have a function of causing the user to set a criterion on which the full charge state is determined.

In Fig. 5, b shows a display example of the second display D2 in the active mode. In this display example, the second display D2 displays indicators representing the remaining amount (to be referred to as the "capsule remaining amount" hereinafter) of the flavor source 131 in the capsule 106, the remaining amount (to be referred to as the "cartridge remaining amount" hereinafter) of the aerosol source in the cartridge 104, and the remaining amount of electric power dischargeable by the power supply 205, that is, the remaining amount of the power supply 205 (to be referred to as the "remaining battery amount" hereinafter). In this display example, the capsule remaining amount is displayed in a bar graph form with six levels, the cartridge remaining amount is displayed in a bar graph form with six levels, and the remaining battery amount is displayed in a bar graph form with five levels. The remaining amount of the power supply 205 or the remaining battery amount can be evaluated by, for example, the SOC (State Of Charge), the charging rate, or the like.

In Fig. 5, a shows a display example of the second display D2 in the charging mode. In the charging mode as well, the capsule remaining amount, the cartridge remaining amount, and the remaining battery amount can be displayed. In an area where the remaining battery amount is displayed, a charging mark representing a charging state can additionally be displayed.

In Fig. 5, c shows display examples of the second display D2 in the aerosol generation mode. Since the capsule remaining amount, the cartridge remaining amount, and the remaining battery amount respectively decrease by generating aerosol, the length of a bar in at least one bar graph decreases, as shown in a left portion in c of Fig. 5. A right portion in c of Fig. 5 shows that the capsule remaining amount is small and there is no remaining battery amount. In this way, the second display D2 can be controlled by the processor 207 to include display concerning an element consumed to generate flavored aerosol, for example, at least one, at least two, or all of the capsule remaining amount, the cartridge remaining amount, and the remaining battery amount.

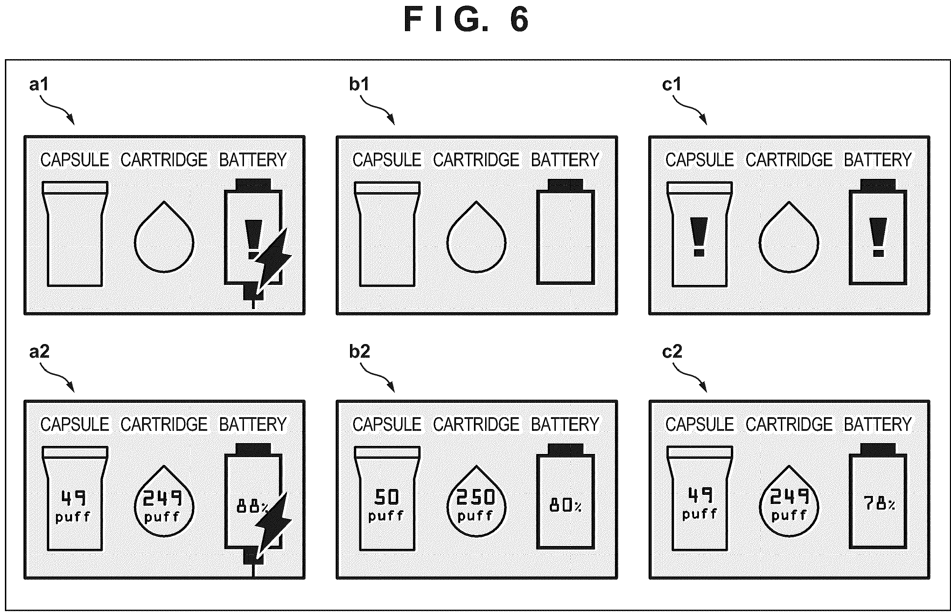

The display forms shown in a to c of Fig. 5 are merely examples, and the display forms of the capsule remaining amount, the cartridge remaining amount, and the remaining battery amount may be other forms. For example, as shown in a1, b1, and c1 of Fig. 6, icons representing only the presence/absence of the remaining amounts of the plurality of elements, respectively, may be displayed. As exemplified in a1, b1, and c1 of Fig. 6, the display form of the second display D2 can include display for specifying one of two states with respect to at least one of the plurality of elements. The two states can include a first state indicating that the capability to generate flavored aerosol is sufficient and a second state indicating that the capability to generate flavored aerosol is insufficient. In the examples in a1, b1, and c1 of Fig. 6, an icon without a mark "!" represents the first state, and an icon with the mark "!" represents the second state. In Fig. 6, a1 shows that the capsule remaining amount and the cartridge remaining amount are in the first state and the remaining battery amount is in the second state. In Fig. 6, b1 shows that the capsule remaining amount, the cartridge remaining amount, and the remaining battery amount are in the first state. In Fig. 6, c1 shows that the cartridge remaining amount is in the first state and the capsule remaining amount and the remaining battery amount are in the second state. As exemplified in b1, b2, and b3 of Fig. 6, the display form of the second display D2 may be such that each remaining amount is indicated by a numerical value.

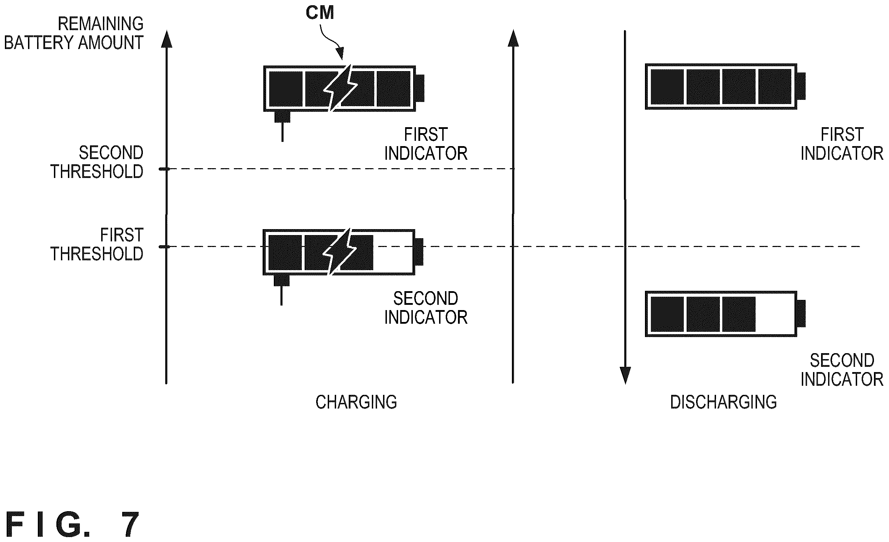

Fig. 7 shows an example of transition of the indicator (to be referred to as the remaining battery amount indicator hereinafter) representing the remaining battery amount displayed on the second display D2. To discriminate between the charging state in which the power supply 205 is charged and the discharging state in which the power supply 205 is discharged, a charging mark CM as an image representing the charging state can be displayed in the charging state. As exemplified in Fig. 7, the processor 207 can change the remaining battery amount indicator when the remaining battery amount becomes smaller than a first threshold in discharging of the power supply 205, and change the remaining battery amount indicator when the remaining battery amount becomes larger than a second threshold different from the first threshold in charging of the power supply 205. In an example, the processor 207 can change the remaining battery amount indicator from a first indicator to a second indicator when the remaining battery amount becomes smaller than the first threshold in discharging of the power supply 205, and change the remaining battery amount indicator from the second indicator to the first indicator when the remaining battery amount becomes larger than the second threshold in charging of the power supply 205.

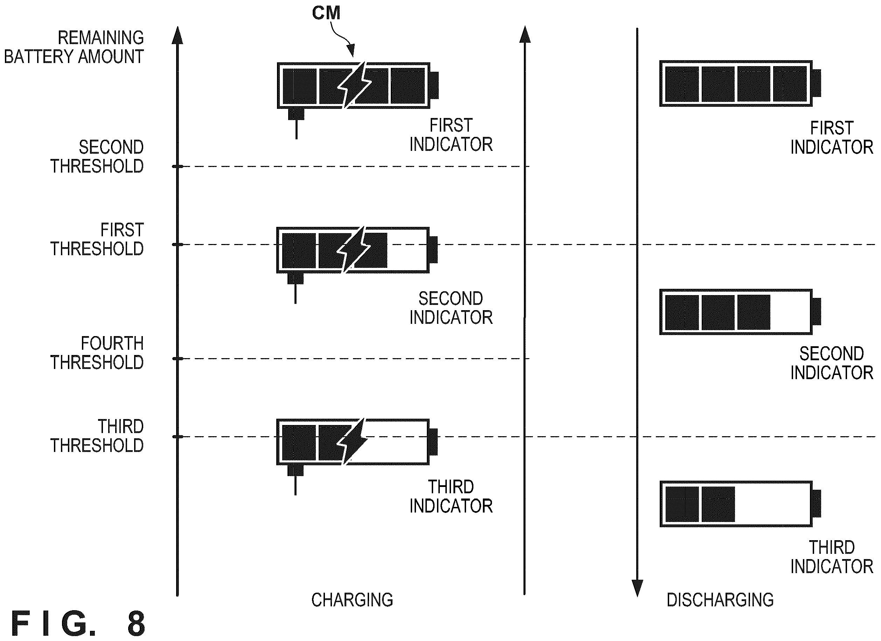

Fig. 8 shows another example of transition of the remaining battery amount indicator displayed on the second display D2. As exemplified in Fig. 8, the processor 207 can change the second indicator to a third indicator when the remaining battery amount becomes smaller than a third threshold smaller than the first threshold in discharging of the power supply 205, and change the third indicator to the second indicator when the remaining battery amount becomes larger than a fourth threshold smaller than the second threshold in charging of the power supply 205.

In the examples shown in Figs. 7 and 8, the remaining battery amount is displayed in five levels, and the remaining battery amount indicator has a threshold other than the above thresholds. More specifically, the remaining battery amount indicator can include the first indicator (full charge), the second indicator, the third indicator, a fourth indicator, and a fifth indicator (no remaining amount). Transition between the first indicator and the second indicator is based on the first threshold (at the time of discharging) and the second threshold (at the time of charging), transition between the second indicator and the third indicator is based on the third threshold (at the time of discharging) and the fourth threshold (at the time of charging), transition between the third indicator and the fourth indicator is based on a fifth threshold (at the time of discharging) and a sixth threshold (at the time of charging), and transition between the fourth indicator and the fifth indicator is based on a seventh threshold (at the time of discharging) and an eight threshold (at the time of charging). The first threshold and the second threshold can be different from each other, the third threshold and the fourth threshold can be different from each other, the fifth threshold and the sixth threshold can be different from each other, and the seventh threshold and the eighth threshold can be different from each other.

As described above, when the threshold as the determination criterion for changing the remaining battery amount indicator in discharging of the power supply 205 is different from the threshold as the determination criterion for changing the remaining battery amount indicator in charging of the power supply 205, it may be understood that a change of the remaining battery amount indicator is provided with hysteresis. In the example shown in Fig. 7, the second threshold is larger than the first threshold. In the example shown in Fig. 8, the second threshold is larger than the first threshold and the fourth threshold is larger than the third threshold. This is advantageous in resolving discomfort for the user that, for example, in a case where charging is stopped or discharging is started immediately after the remaining battery amount indicator changes in charging, the remaining battery amount indicator immediately changes again. Display control with hysteresis is advantageous in decreasing the number of times of change (rewrite) of display and reducing the power consumption.

Conversely, a threshold (the 2i^{th} threshold (i is a natural number)) at the time of charging may be smaller than a corresponding threshold (the (2i-1)^{th} threshold) at the time of discharging. In other words, the threshold at the time of discharging may be larger than the corresponding threshold at the time of charging. In this case, the second threshold is smaller than the first threshold and the fourth threshold is smaller than the third threshold. For example, when the charging rate decreases, the user who wants to go out with a state (a state close to the full charge state) in which the charging rate is as high as possible may want to immediately recognize it. It is convenient for such user that the threshold at the time of charging is smaller than the threshold at the time of discharging.

The difference between the second threshold and the first threshold is larger than a change of the remaining battery amount caused by heating of the heater 127 corresponding to, for example, at least one, at least three, at least five, or at least 10 puff operations. Alternatively, the difference between the threshold (the 2i^{th} threshold (i is a natural number)) at the time of charging and the corresponding threshold (the (2i-1)^{th} threshold) at the time of discharging is larger than a change of the remaining battery amount caused by heating of the heater 127 corresponding to, for example, at least one, at least three, at least five, or at least 10 puff operations.

Alternatively, in a given form, the inhalation apparatus 100, the electrical component 110, or the processor 207 can control heating of the heater 127 to heat the aerosol source in accordance with preset temperature control information. A sequence from the start to the end of heating of the aerosol source based on the temperature control information can be defined as one sequence. The difference between the second threshold and the first threshold is larger than a change of the remaining battery amount caused by executing the sequence, for example, at least once, at least three times, at least five times, or at least 10 times. Alternatively, the difference between the threshold (the 2i threshold (i is a natural number)) at the time of charging and the corresponding threshold (the (2i-1)^{th} threshold) at the time of discharging is larger than a change of the remaining battery amount caused by executing the sequence, for example, at least once, at least three times, at least five times, or at least 10 times. The temperature control information can be, for example, information for controlling a temporal change of electric power supplied to the heater 127 or the temperature of the heater 127. The temperature control information may be referred to as a temperature profile. A period during which the temperature of the heater 127 is controlled based on the temperature control information can include, for example, at least one or two temperature rise periods and at least one temperature lowering period. In the temperature rise period and the temperature lowering period, the temperature of the heater 127 can undergo feedback control or feedforward control.

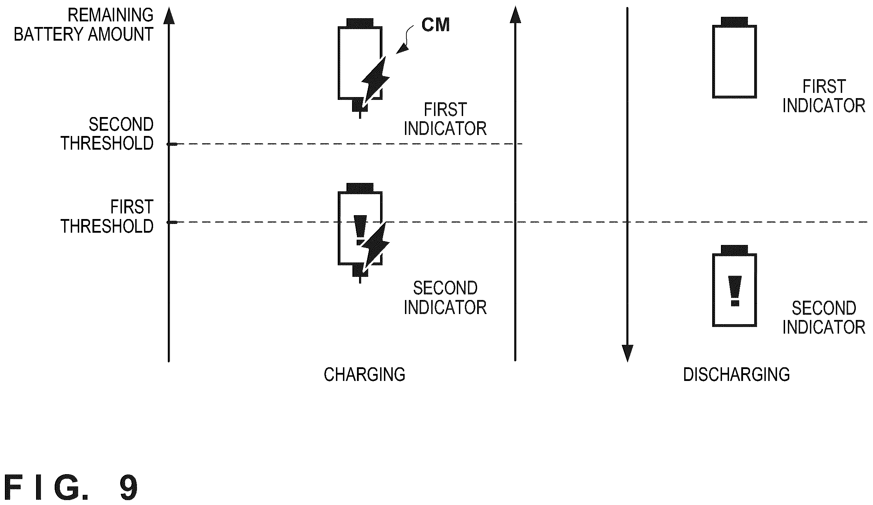

Fig. 9 shows still another example of transition of the remaining battery amount indicator displayed on the second display D2. In the example shown in Fig. 9, the second display D2 selectively displays the first indicator or the second indicator as the remaining battery amount indicator. That is, in the example shown in Fig. 9, the remaining battery amount indicator displayed on the second display D2 includes only two types of indicators, that is, the first indicator and the second indicator. The first indicator represents that the remaining battery amount is sufficient, and the second indicator represents that the remaining battery amount is insufficient.

In an example, the difference (A) between the maximum value of the remaining battery amount and the second threshold is smaller than the difference (B) between the second threshold and the first threshold. The processor 207 can operate to suppress discharging of the power supply 205 in a case where the remaining battery amount is smaller than a predetermined value, and the difference (B) between the second threshold and the first threshold may be larger than the difference (C) between the first threshold and the predetermined value. The difference (C) between the first threshold and the predetermined value may be larger than the difference (A) between the maximum value of the remaining battery amount and the second threshold.

The power supply unit 102 can include a charging connector supplied with electric power for charging the power supply 205, like the above-described V_{bus} port, and the processor 207 can change display of the second display D2 even during charging of the power supply 205 using the electric power supplied via the charging connector.

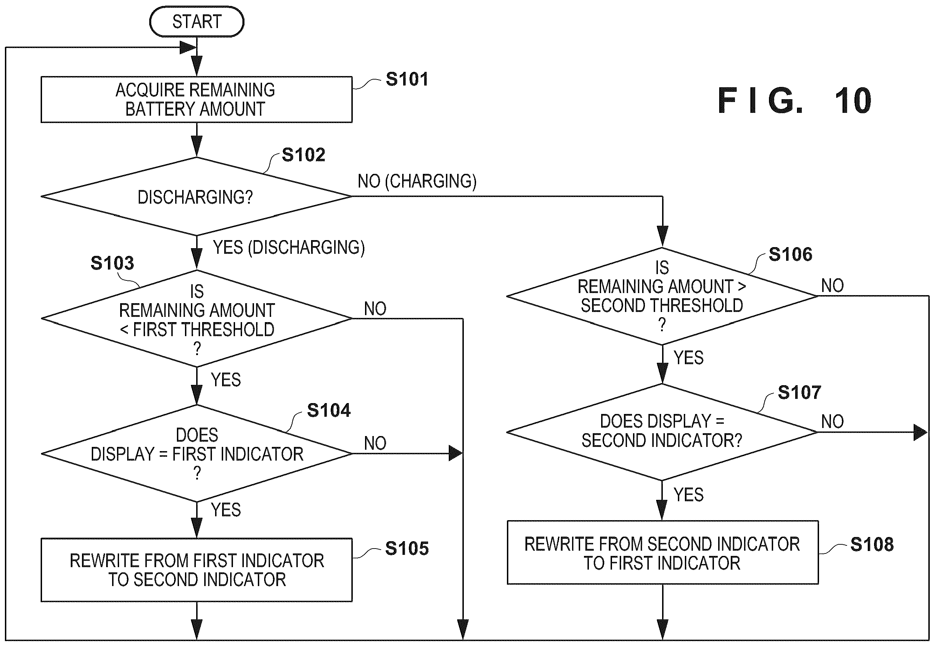

Fig. 10 shows an example of the operation of the processor 207 concerning display of the remaining battery amount indicator. The operation shown in Fig. 10 is applicable to transition of display between the first indicator and the second indicator in the example shown in each of Figs. 7, 8, and 9. In step S101, the processor 207 acquires the remaining battery amount. For example, the processor 207 can acquire the remaining battery amount by acquiring the output voltage of the power supply 205. Alternatively, if the power supply unit 102 includes a management circuit that manages the power supply 205, the processor 207 can acquire the remaining battery amount based on an output from the management circuit.

In step S102, the processor 207 determines whether the current state is the discharging state in which the power supply 205 is discharged or the charging state in which the power supply 205 is charged. If the current mode is the charging mode, the processor 207 can determine that the current state is the charging state; otherwise, the processor 207 can determine that the current state is the discharging state. If the discharging state is determined, the process advances to step S103. If the charging state is determined, the process advances to step S106.

In step S103, the processor 207 determines whether the remaining battery amount is smaller than the first threshold. If the remaining battery amount is smaller than the first threshold, the process advances to step 104; otherwise, the process returns to step S101. In step S104, the processor 207 determines whether the remaining battery amount indicator currently displayed on the second display D2 is the first indicator. If the displayed remaining battery amount indicator is the first indicator, the processor 207 changes the first indicator to the second indicator in step S105; otherwise, the process returns to step S101 (the first indicator is maintained).

If the charging state is determined, the processor 207 determines, in step S106, whether the remaining battery amount is larger than the second threshold. If the remaining battery amount is larger than the second threshold, the process advances to step 107; otherwise, the process returns to step S101. In step S107, the processor 207 determines whether the remaining battery amount indicator currently displayed on the second display D2 is the second indicator. If the displayed remaining battery amount indicator is the second indicator, the processor 207 changes the second indicator to the first indicator in step S108; otherwise, the process returns to step S101 (the second indicator is maintained).

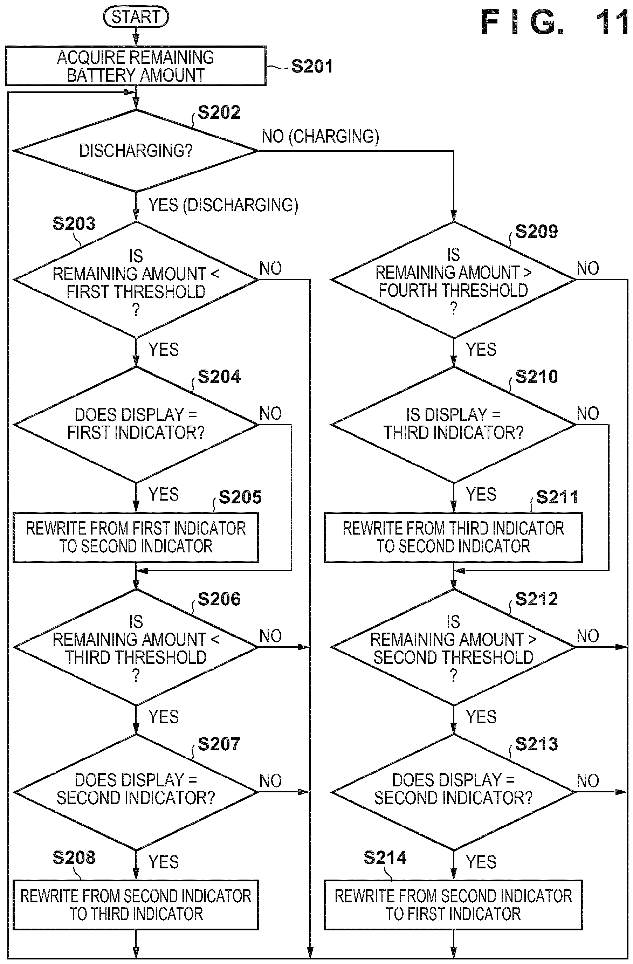

Fig. 11 shows another example of the operation of the processor 207 concerning display of the remaining battery amount indicator. The operation shown in Fig. 11 is applicable to transition of display between the first indicator and the second indicator and transition of display between the second indicator and the third indicator in the example shown in Fig. 8. In step S201, the processor 207 acquires the remaining battery amount. For example, the processor 207 can acquire the remaining battery amount by acquiring the output voltage of the power supply 205. Alternatively, if the power supply unit 102 includes a management circuit that manages the power supply 205, the processor 207 can acquire the remaining battery amount based on an output from the management circuit.

In step S202, the processor 207 determines whether the current state is the discharging state in which the power supply 205 is discharged or the charging state in which the power supply 205 is charged. If the current mode is the charging mode, the processor 207 can determine that the current state is the charging state; otherwise, the processor 207 can determine that the current state is the discharging state. If the discharging state is determined, the process advances to step S203. If the charging state is determined, the process advances to step S209.

In step S203, the processor 207 determines whether the remaining battery amount is smaller than the first threshold. If the remaining battery amount is smaller than the first threshold, the process advances to step 204; otherwise, the process returns to step S201. In step S204, the processor 207 determines whether the remaining battery amount indicator currently displayed on the second display D2 is the first indicator. If the displayed remaining battery amount indicator is the first indicator, the processor 207 changes the first indicator to the second indicator in step S205; otherwise, the process advances to step S206 (the first indicator is maintained).

In step S206, the processor 207 determines whether the remaining battery amount is smaller than the third threshold. If the remaining battery amount is smaller than the third threshold, the process advances to step S207; otherwise, the process returns to step S201. In step S207, the processor 207 determines whether the remaining battery amount indicator currently displayed on the second display D2 is the second indicator. If the displayed remaining battery amount indicator is the second indicator, the processor 207 changes the second indicator to the third indicator in step S208; otherwise, the process returns to step S201 (the second indicator is maintained).

If the charging state is determined, the processor 207 determines, in step S209, whether the remaining battery amount is larger than the fourth threshold. If the remaining battery amount is larger than the fourth threshold, the process advances to step 210; otherwise, the process returns to step S201. In step S210, the processor 207 determines whether the remaining battery amount indicator currently displayed on the second display D2 is the third indicator. If the displayed remaining battery amount indicator is the third indicator, the processor 207 changes the third indicator to the second indicator in step S211; otherwise, the process advances to step S212 (the third indicator is maintained).

In step S212, the processor 207 determines whether the remaining battery amount is larger than the second threshold. If the remaining battery amount is larger than the second threshold, the process advances to step 213; otherwise, the process returns to step S201. In step S213, the processor 207 determines whether the remaining battery amount indicator currently displayed on the second display D2 is the second indicator. If the displayed remaining battery amount indicator is the second indicator, the processor 207 changes the second indicator to the first indicator in step S214; otherwise, the process returns to step S201 (the first indicator is maintained).

In the above description, the remaining battery amount indicator is displayed on the second display D2. However, the remaining battery amount indicator may be displayed using another display, for example, at least one of the first display D1 and the third display D3. Alternatively, the remaining battery amount indicator may be displayed using the plurality of displays D1, D2, and D3. Alternatively, one indicator (for example, the first indicator) as the remaining battery amount indicator may be displayed using at least one of the plurality of displays D1, D2, and D3, and another indicator (for example, the second indicator) as the remaining battery amount indicator may be displayed using at least another one of the plurality of displays D1, D2, and D3.

The invention is not limited to the foregoing embodiments, and various variations/changes are possible within the spirit of the invention.

### REFERENCE SIGNS LIST

100: inhalation apparatus, 102: controller for inhalation apparatus, 103: holding portion, 104: atomizer, 125: container, 126: transport portion, 127: heater, D1, D2, D3: display, 207: processor

## Claims

1. A controller for an inhalation apparatus, that operates by electric power supplied from a chargeable power supply, comprising:
a holding portion configured to hold an atomizer including a heater configured to heat an aerosol source;
a nonvolatile display configured to display an indicator concerning a remaining amount of the power supply; and
a processor configured to change the indicator in a case where the remaining amount becomes smaller than a first threshold in discharging of the power supply, and to change the indicator in a case where the remaining amount becomes larger than a second threshold different from the first threshold in charging of the power supply.

2. The controller for the inhalation apparatus according to claim 1, wherein the processor changes the indicator from a first indicator to a second indicator in a case where the remaining amount becomes smaller than the first threshold in discharging of the power supply, and changes the indicator from the second indicator to the first indicator in a case where the remaining amount becomes larger than the second threshold in charging of the power supply.

3. The controller for the inhalation apparatus according to claim 2, wherein the processor changes the second indicator to a third indicator in a case where the remaining amount becomes smaller than a third threshold smaller than the first threshold in discharging of the power supply, and changes the third indicator to the second indicator in a case where the remaining amount becomes larger than a fourth threshold smaller than the second threshold in charging of the power supply.

4. The controller for the inhalation apparatus according to any one of claims 1 to 3, wherein the second threshold is larger than the first threshold.

5. The controller for the inhalation apparatus according to any one of claims 1 to 3, wherein the second threshold is smaller than the first threshold.

6. The controller for the inhalation apparatus according to any one of claims 1 to 3, wherein a difference between the second threshold and the first threshold is larger than a change of the remaining amount caused by heating of the heater corresponding to at least one puff operation.

7. The controller for the inhalation apparatus according to any one of claims 1 to 3, wherein
the processor is configured to heat the aerosol source in accordance with preset temperature control information, and a sequence from a start to an end of heating of the aerosol source based on the temperature control information is one sequence, and
a difference between the second threshold and the first threshold is larger than a change of the remaining amount caused by executing the sequence at least once.

8. The controller for the inhalation apparatus according to claim 2, wherein
the nonvolatile display selectively displays one of the first indicator and the second indicator as the indicator concerning the remaining amount of the power supply, and
the first indicator represents that the remaining amount is sufficient and the second indicator represents that the remaining amount is insufficient.

9. The controller for the inhalation apparatus according to claim 8, wherein a difference between a maximum value of the remaining amount and the second threshold is smaller than a difference between the second threshold and the first threshold.

10. The controller for the inhalation apparatus according to claim 9, wherein
in a case where the remaining amount is smaller than a predetermined value, the processor suppresses discharging of the power supply, and
the difference between the second threshold and the first threshold is larger than a difference between the first threshold and the predetermined value.

11. The controller for the inhalation apparatus according to claim 10, wherein the difference between the first threshold and the predetermined value is larger than the difference between the maximum value of the remaining amount and the second threshold.

12. The controller for the inhalation apparatus according to any one of claims 1 to 11, wherein in a state in which the power supply is charged, an image representing the charging state is displayed on the nonvolatile display.

13. The controller for the inhalation apparatus according to any one of claims 1 to 12, further comprising a charging connector configured to be supplied with electric power for charging the power supply,
wherein the processor changes display of the nonvolatile display using the electric power supplied via the charging connector.
